# EUROPEAN PATENT APPLICATION

(11) **EP 1 638 049 A2**
(43) Date of publication of application: **22.03.2006**
(21) Application number: 05107477.1
(22) Date of filing: 15.08.2005
(51) Int. Cl.: G06T 1/20

(54) **Method, apparatus and computer program product for processing image data stored on a memory for rendering an image on a device**

(30) Priority: 26.08.2004 EP 04292091
(71) Applicant: Océ-Technologies B.V., 5914 CC Venlo (NL)
(72) Inventor: Sobczak, Philippe, 94230, Cachan (FR)
(74) Representative: van Meeteren, Arend Anthonie

(57) **Abstract**

The invention relates to a method and an apparatus for processing image data stored on a memory for rendering an image on a device. The method comprises the steps of dividing the image data into a number of portions of image data, each consisting of a number of untruncated data lines; applying to each portion of image data a rasterizing algorithm comprising:
a. writing the portion of image data to a RAM;
b. halftoning the portion of image data for obtaining a portion of rasterized image data;
c. writing the portion of rasterized image data to a mass memory;
assembling the portions of rasterized image data on the mass memory for obtaining rasterized image data; dividing the rasterized image data into a number of blocks; applying a transformation algorithm to each block of rasterized image data for obtaining blocks of processed image data.

## Description

The invention relates to a method of processing image data stored on a memory for rendering an image on a device. The invention relates more particularly to a method of processing image data for printing an image on a print engine or for viewing an image on a display device. The invention relates further to a method of processing image data comprising transformation of the image such as rotation or symmetry operation (mirroring).

A method of processing image data stored on a memory for rendering an image on a device is known from the prior art. In particular, a method is known for rotating and rasterizing image data for printing purposes. The image data representing the image to be printed is written onto a Random Access Memory (RAM) and is divided into a number of blocks. The data within each block is rotated and the location of each of the block in the memory is rotated with respect to the original image. The rotated image data is then rasterized and transmitted to a print engine. With the method known from the prior art, however, difficulties are encountered when the image to be processed is having a file size larger than the RAM space allocated for storing image data. Even when the image data is divided into portions for processing, the portions having a size inferior to the RAM space allocated for storing image data, problems remain. For example, after rotation of a portion, it may happen that that the rotated image data portion comprises truncated data lines. It makes advance image processing, such as halftoning by error diffusion dither or scaling by area mapping, cumbersome.

The present invention seeks to provide a method of processing image data stored on a memory for rendering an image on a device particularly suited for image data with a file size larger than the RAM space allocated for storing image data.

The method according to the invention comprises the steps of:
- dividing the image data into a number of portions of image data, each consisting of a number of untruncated data lines;
- applying to each portion of image data a rasterizing algorithm comprising:
   a. writing the portion of image data to a RAM;
   b. halftoning said portion of image data for obtaining a portion of rasterized image data;
   c. writing the portion of rasterized image data to a mass memory;
- assembling the portions of rasterized image data on the mass memory for obtaining rasterized image data;
- dividing the rasterized image data into a number of blocks;
- applying a transformation algorithm to each block of rasterized image data for obtaining blocks of processed image data.

The transformation algorithm is applied to blocks of rasterized image data, which makes the processing of image data according to the invention more convenient than according to the prior art. In particular, the rasterizing algorithm is applied to portions of original data, consisting of a number of untruncated data lines, making the use of advance image processing, such as halftoning by error diffusion dither or scaling by area mapping, convenient.

Furthermore, the method according to the invention is more efficient than the method known from the prior art. For example, if the original image data is a grey scale image coded with 8 bits per pixel, processing the image data is faster with the method according to the invention than with the method according to the prior art. This is because in the first case, the transformation (rotation for example) is performed on rasterized image data being coded with 1 bit per pixel, while in the second case, the transformation (rotation for example) is performed on the original data (8 bits per pixel).

According to a method known from US 2002/0191865 A1 , images are manipulated by processing blocks of the image and are printed on a plot unit. Manipulation of the image blocks includes image rotation, performing logical function such as ANDing or ORing, and generating an image by repeatedly using all or part of another image. The plot unit may be capable of generating a rasterized image. Alternatively, image data may be transmitted to the plot unit in a rasterized format. However, it is not known from this document to divide the image data into a number of portions of image data, each consisting of a number of untruncated data lines, to apply to each portion of image data a rasterizing algorithm comprising:
a. writing the portion of image data from the memory to a RAM;
b. halftoning said portion of image data for obtaining a portion of rasterized image data;
c. writing the portion of rasterized image data to a mass memory;
to assemble the portions of rasterized image data on the mass memory for obtaining rasterized image data, to divide the rasterized image data into a number of blocks and to apply a transformation algorithm to each block of rasterized image data for obtaining blocks of processed image data.

In one embodiment of the invention, the rasterizing algorithm further comprises the step of scaling the portion of image data. It is particularly convenient to apply the step of scaling (for example area mapping scaling) to a portion of image data consisting of a number of untruncated data lines. It also allows a reduction of the time needed for data processing compared to the methods known from the prior art.

Preferably, image data compression is applied to each portion of rasterized image data. More space can thus be made available on the mass memory.

The transformation algorithm may comprise a rotation applied to the blocks of rasterized image data. The transformation algorithm may also comprise a symmetry operation applied to the blocks of rasterized image data.

The invention particularly provides a method of processing image data wherein the blocks of rasterized image data are successively read out of the mass memory, transformed into blocks of processed image data and transferred to the device according to a sequence being the same as the sequence in which the blocks of processed image data are to be rendered on the device. This a very efficient way of processing the blocks of rasterized image data for printing or viewing purposes, for example. Printing or viewing the blocks of processed image data can thus start before all blocks of rasterized image data have been processed.

The invention also relates to an apparatus for processing image data stored on a memory for rendering an image on a device. The invention provides such an apparatus comprising a RAM, a mass memory, a module for dividing the image data into a number of portions of image data, each consisting of a number of untruncated data lines, a raster image processor unit for applying a rasterization algorithm to each block of image data, executing the steps of:
a. writing a portion of image data to the RAM;
b. halftoning the portion of image data for obtaining a portion of rasterized image data;
c. writing the portion of rasterized image data to the mass memory;
a module for assembling the portions of rasterized image data on the mass memory for obtaining rasterized image data, a module for dividing the rasterized image data into a number of blocks, and a conversion module for transforming each block of rasterized image data into a block of processed image data.

The invention also provides an apparatus further comprising a print engine and a module for transferring the blocks of processed image data to the print engine.

The invention also provides an apparatus further comprising a display device and a module for transferring the blocks of processed image data to the display device.

The invention particularly provides a computer program product residing on a computer readable medium comprising instructions for causing at least one process unit to perform the steps of the method of the invention.

An embodiment of the present invention is now explained with reference to the drawings.
Fig. 1A is a schematic diagram of a print server connected to a print engine for processing and printing an image according to an embodiment of the invention.
Fig. 1 B is a schematic diagram of the printing parts of a print engine.
Fig. 2 is component diagram of an apparatus for processing image data according to an embodiment of the invention.
Fig. 3 is a flow diagram showing a method according to an embodiment of the invention.
Figs. 4A to 4D illustrate a scaling and a halftoning operation followed by a rotation of 90 degrees of an image to be printed according to an embodiment of the invention.

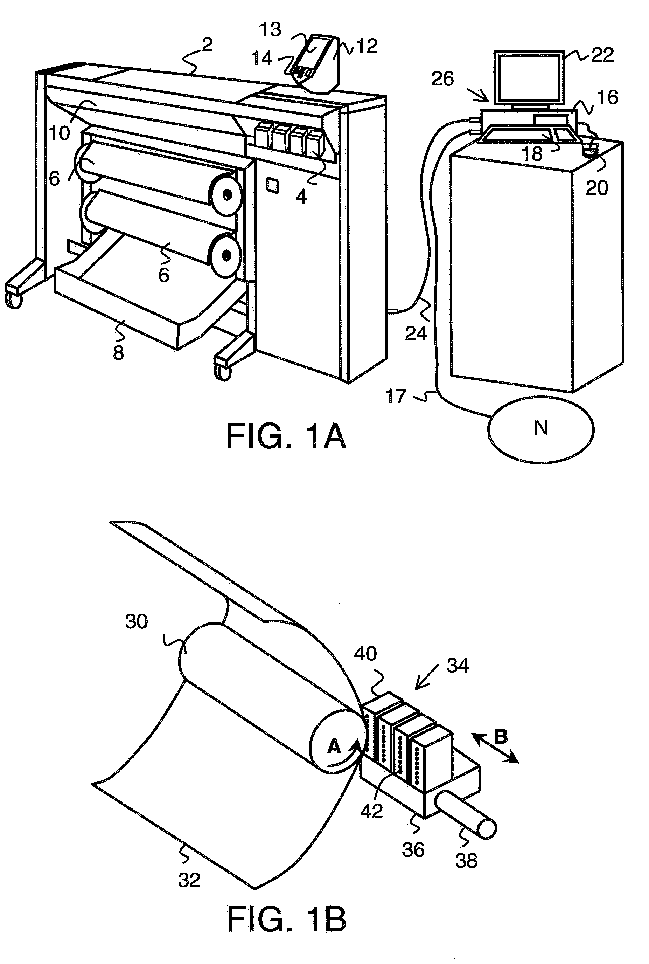

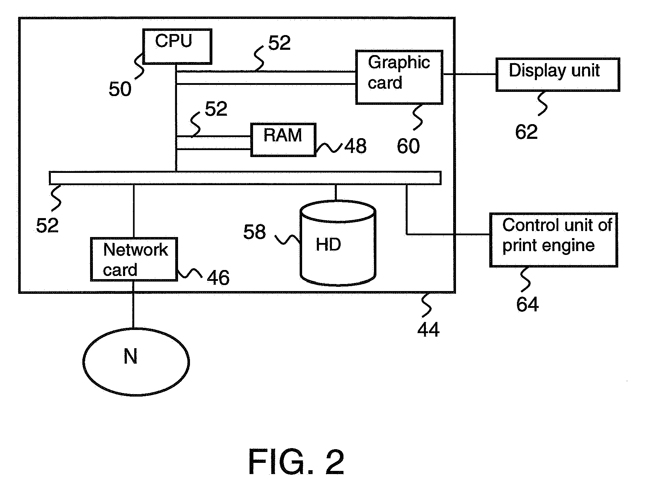

Processing and rendering an image according to the invention can be performed in an apparatus as shown in Fig. 1A. A print engine 2 is connected to a print server 26 suited for sending print jobs to the print engine 2 through a connection cable 24. The print server 26 is further connected to a network N, the connection being diagrammatically shown in the form of a cable 17. N may be a local area network that enables a number of users logged on client computers sending print jobs to the printer 2, or may represent the internet. The print server 26 receives print jobs from the client computers, converts them in a format that can be processed by the print engine 2 and ensures in cooperation with a control unit (not shown) placed inside the print engine 2 that the digital images send with the print jobs are printed on image supports. For performing these tasks, the printer server 26 is provided with a controller 44 of which the essential parts are shown in Fig. 2.

The print engine 2 can use any number of printing techniques. It can be a thermal or piezoelectric inkjet printer, a pen plotter, or a press system based on organic photoconductor technology, for instance. In the example shown in Fig. 1A, printing is achieved using a wide format inkjet printer provided with four different basic inks, such as cyan, magenta, yellow and black. The basic inks are stored in four ink containers 4 for supplying ink to the ink jet printhead shown in Fig. 1 B. The images are printed on an ink receiving medium such as a sheet of paper supplied by any of the paper rolls 6. Printed sheets of papers are deposited in the delivery tray 8. The user interface panel 12 is provided with a display screen 13 and a key panel 14. The user interface panel 12 is connected to the control unit inside the print engine and to the print server 26. The key panel 14 includes a contact lock for switching on and off the print engine and other input means such as buttons for selecting a user, setting queuing parameters etc. The housing 10 contains the printhead which is mounted on a carriage for printing swaths of images.

As shown in Fig. 1 B, an ink jet printer comprises a platen 30 driven for rotation in the direction of an arrow A for transporting a paper sheet 32 which serves as an image recording medium. A printhead 34 is mounted on a carriage 36 which is guided on guide rails 38 and travels back and forth in the direction of an arrow B along the platen 30 so as to scan the paper sheet 32. The printhead 34 comprises four nozzle heads 40, one for each of the basic colours yellow, magenta, cyan and black. An ink is supplied to a nozzle head 40 from an ink container (not shown) through a pipe. On the side facing the sheet 32, each nozzle head 40 has a linear array of nozzles 42. The nozzle heads 40 are energised in accordance with image information of an image to be printed on the sheet 32. Signals are transmitted to the printhead 34 through a connector (not shown) mounted on the carriage 36. Signals in accordance with print data arise from a control unit connected to the printhead 34 through a connector (not shown). Each nozzle 42 can be energised separately so as to eject an ink droplet which will form a dot at a corresponding pixel position on the sheet 32. Thus, when the printhead 34 performs a single stroke along the platen 30, each nozzle 42 can be energised to draw a single pixel line of the intended image. As a result, during each forward or backward stroke of the carriage 36, the printhead 34 will print a swath or band of the image, and the number of pixels lines of the swath will correspond to the number of nozzles 42 present in each nozzle array. Although only eight nozzles 42 are shown per nozzle head 40 in Fig. 1 B, in practice, the number of nozzles is considerably larger.

When a user wants to print a digital document stored on a workstation connected to the network N, for example an engineering drawing having the format HP-GL/2, he or she calls up a client application by clicking an icon intended for this purpose in the application window of his monitor. The user selects the print engine on which the document is to be printed, for example the print engine 2. The data file of the document to be printed is thus transferred through the network N to the print server 26 connected to the print engine 2. For sending the file, an http network communication may be used. The print server 26 is provided with a controller 44 (Fig. 2) comprising a Central Processing Unit (CPU) 50, a Random Access Memory (RAM) 48, a graphic card 60, a network card 46 and a hard disk 58. Data are send and received within the controller 44 through a bus system 52. The controller 44 of the print server 26 receives the data file of the document to be printed through the network card 46. The file is then written onto the mass memory (hard disk 58).

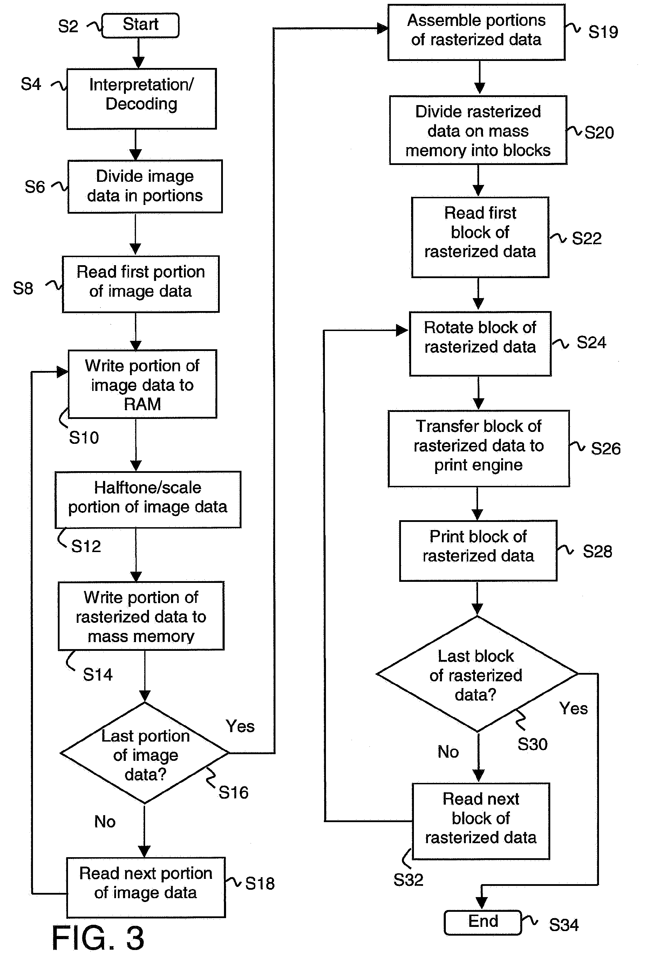

Fig. 3 is a flow diagram showing a method according to an embodiment of the invention. In step S2, a program, stored for example on the hard disk 58, is started said program comprising instructions which are executed by the CPU 50. In step S4, the document file is interpreted and decoded in order to obtain image data in a format suited for the operations that follow. The interpretation and decoding are executed by the CPU 50, the interpretation function (interpreter) being defined in a computer program stored on the hard disk 58. The interpreter examines the data of the document file and identifies the command embedded in the data, such as printer control, page format, font management, text layout and graphics. The decoder creates image data (graphic primitives) representing the document to be printed. A well suited format for the image data is TIFF (Tagged Image File Format), which may contain tiles or multiple bands and whereby the colours may be defined in a colour space having three colour planes, each pixel being represented by 24 bits (8 bits for each colour plane).

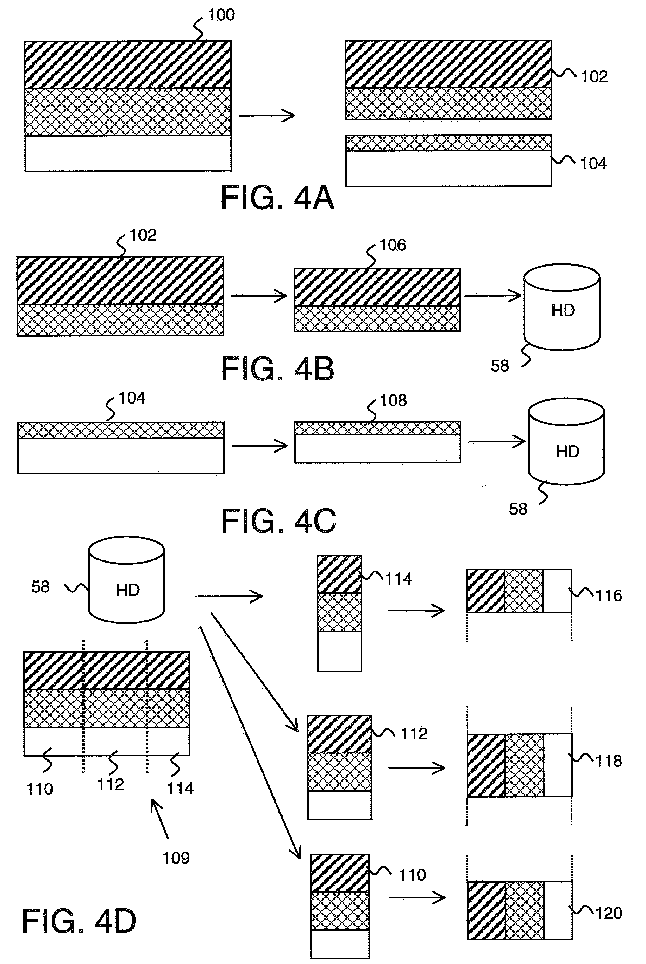

In step S6, the TIFF image data, representing the document to be printed, is divided into portions. This step is illustrated in Fig. 4A. The image data 100, being in the example a TIFF image having a data size reaching N0, is divided into two portions, a first portion 102 having a data size N2 and a second portion 104 having a data size N4. A portion contains a plurality of TIFF bands.

The processor 50 of the controller 44 calls a function for reading the first portion 102 of the image data (step S8), and for writing the portion 102 to the RAM 48 of the controller (S10). The portion 102 contains solely data lines that are untruncated. In the example, each portion contains a number of TIFF bands, ensuring that each one of the data lines is untruncated. The size N2 of the portion 102 is such that N2 is equal to N or smaller than N, N being the size of the space allocated on the RAM 48 for storing image data.

In step S12, a Raster Image Processing (RIP) algorithm is applied to the portion 102 of image data being stored on the RAM. The RIP algorithm is embedded in a program stored on the hard disk 58 and executed by the CPU 50. In particular, the TIFF data of the portion 102 is halftoned by the RIP algorithm. Digital halftoning is the process of converting an image containing many different levels of grey or colour into a representation that is suitable for display or printing on a device that only supports a few different grey or colour levels. In so-called binary printers, only two possible energy levels can be applied to an image forming element (for example, the nozzle of an ink jet printer), one level '1' for giving rise to dot, the other level '0' corresponding to the absence of dot. The portion of image data (TIFF) is processed into a binary data, one layer being obtained for each process colours, for example C, M, Y, K. This is done by the RIP algorithm according to well-known halftoning techniques. For example, error diffusion dither can be used. The data obtained after application of the RIP algorithm is thus halftoned image data.

Another transformation that may be applied to the portion of data 102 (on the RAM) is scaling, as illustrated in Fig. 4B. A possible algorithm used for the scaling operation is area mapping scaling. Halftoning and scaling transformations are applied by the RIP algorithm on the data of the portion 102, resulting in a portion of data 106. In step S14, the portion of rasterized image data 106 is written to the hard disk 58. The memory space in the RAM 48 allocated for image data is made free for performing the next tasks.

In step S16, a boolean test if performed. If all portions of image data have been rasterized by the RIP algorithm, step S19 is performed. Otherwise, the next portion of image data is read (S18). In the example, the portion 104 is the next portion of image data to be transformed. It is written to the RAM 48 for applying the RIP algorithm to said portion. The size N4 of the portion 104 is such that N4 is equal to N or smaller than N, N being the size of the space allocated on the RAM 48 for storing image data. Then, as illustrated in Fig. 4C, the RIP algorithm, comprising the steps of halftoning and for example scaling, is applied to the portion 104. The transformed portion 108, consisting of halftoned and scaled image data, is written on the hard disk 58 of the controller 44. The boolean test (S16) is performed, and since 104 is the last image data portion of the image data 100, the program goes to the next step (S19).

In step S19, the portions of rasterized image data are assembled for obtaining a rasterized image data representing the image to be printed. Here, it means that the portions 106 and 108 are merged, for obtaining the rasterized image data 109.

In the part of the program that follows, the steps of dividing the rasterized image data into blocks, reading blocks of rasterized image data, transforming the blocks of rasterized image data into blocks of processed image data and transferring the blocks of processed image data to the print device 2 for printing are executed by the processor 50. Examples of transformations performed on the rasterized data blocks are rotation and/or mirroring. Other transformations are possible such as cropping, applying logical functions (e.g. ANDing, ORing), repeating parts of the image etc.

In step S20, the rasterized image data 109 (i.e. the merger of portions 106 and 108), is divided into three blocks 110, 112, 114, as shown in Fig. 4D. In the print job, a rotation of 90 degrees anti-clockwise to be applied to the image data is defined. The algorithm of the program is able to anticipate that first block of data to be printed out by the print engine 2 is the block 114, once rotated. For efficiency reasons, the first block of rasterized data that is read is thus 114 (see Fig. 4D). A rotation algorithm is applied to the block 114 (S24), according to well-known rotation techniques. The processed block 116 is transferred (S26) to the print engine 2. There, the block 116 can be written on a buffer memory of the print engine, and the control unit of the print engine sends signals in accordance with print data to the printhead 34 for printing the processed block 116. The printhead 34 then starts printing (S28) swaths of the image.

Concurrently, the boolean test S30 is performed to determine if the last block of processed data is being printed. If it is the case, the program can be ended (S34). In the example, the steps of reading the next block of rasterized image data (S32), rotating the block of rasterized image data (S24) transferring the block of rotated data to the print engine (S26) and printing the block (S28) have to be repeated for the blocks of rasterized image data 112 and 110, being respectively transformed by the rotation algorithm into the blocks 118 and 120. Finally, all processed blocks are printed, according to the sequence of the blocks 116, 118 and 120, due to the type of the rotation.

The controller 44 of the print server is an embodiment apparatus for processing image data stored on a memory for rendering an image on a device according to the invention. It is provided with a RAM 48 and a mass memory 58. The module for dividing the image data into a number of portions of image data can be in the form of instructions coded in a program executable by the CPU 50, the program being stored on the hard disk 58. The raster image processor unit can also be provided in the form of a sequence of executable instructions. The same holds for the other modules of the controller 44: a module for assembling the portions of rasterized image data on the mass memory for obtaining rasterized image data, a module for dividing the rasterized image data into a number of blocks, and a conversion module for transforming each block of rasterized image data into a block of processed image data.

Although the invention has been explained by reference to the above-described exemplified embodiment, it is not limited thereto. It will be clear to the skilled person that other embodiments are possible within the scope of the claims.

## Claims

1. Method of processing image data stored on a memory for rendering an image on a device, comprising the steps of:
- dividing the image data into a number of portions of image data, each consisting of a number of untruncated data lines;
- applying to each portion of image data a rasterizing algorithm comprising:
a. writing the portion of image data to a RAM;
b. halftoning said portion of image data for obtaining a portion of rasterized image data;
c. writing the portion of rasterized image data to a mass memory;
- assembling the portions of rasterized image data on the mass memory for obtaining rasterized image data
- dividing the rasterized image data into a number of blocks
- applying a transformation algorithm to each block of rasterized image data for obtaining blocks of processed image data.

2. Method of processing image data according to claim 1, the rasterizing algorithm further comprising the step of scaling the portion of image data.

3. Method of processing image data according to claim 1 or 2, image data compression being applied to each portion of rasterized image data.

4. Method of processing image data according to claim 1, 2 or 3, the transformation algorithm comprising a rotation applied to the block of rasterized image data.

5. Method of processing image data according to any of the claims 1 to 4, the transformation algorithm comprising a symmetry operation applied to the block of rasterized image data.

6. Method of processing image data according to any of the preceding claims, **characterised in that** the blocks of rasterized image data are successively read out of the memory, transformed into blocks of processed image data and transferred to the device according to a sequence being the same as the sequence in which the blocks of processed image data are to be rendered on the device.

7. Apparatus for processing image data stored on a memory for rendering an image on a device comprising a RAM, a mass memory, a module for dividing the image data into a number of portions of image data, each consisting of a number of untruncated data lines, a raster image processor unit for applying a rasterization algorithm to each block of image data, executing the steps of:
a. writing a portion of image data to the RAM;
b. halftoning said portion of image data for obtaining a portion of rasterized image data;
c. writing the portion of rasterized image data to the mass memory;
a module for assembling the portions of rasterized image data on the mass memory for obtaining rasterized image data, a module for dividing the rasterized image data into a number of blocks, and a conversion module for transforming each block of rasterized image data into a block of processed image data.

8. Apparatus for processing image data and printing an image, comprising the apparatus according to claim 7, a print engine and a module for transferring the blocks of processed image data to the print engine.

9. Apparatus for processing image data and displaying an image, comprising the apparatus according to claim 7, a display device and a module for transferring the blocks of processed image data to the display device.

10. Computer program product residing on a computer readable medium comprising instructions for causing at least one process unit to perform the method of any of the claims 1 to 6.
